Europäisches Patentamt

European Patent Office

Office européen des brevets

(11) Veröffentlichungsnummer: **0 198 285**
**B1**

(12) **EUROPÄISCHE PATENTSCHRIFT**

(45) Veröffentlichungstag der Patentschrift:
16.08.89

(51) Int. Cl.⁴: **G 11 B 15/665**

(21) Anmeldenummer: **86104130.9**

(22) Anmeldetag: **25.03.86**

(54) Vorrichtung zur Führung eines Magnetbandes in einem Videomagnetbandgerät.

(30) Priorität: **13.04.85 DE 3513309**

(43) Veröffentlichungstag der Anmeldung:
**22.10.86 Patentblatt 86/43**

(45) Bekanntmachung des Hinweises auf die Patenterteilung:
**16.08.89 Patentblatt 89/33**

(84) Benannte Vertragsstaaten:
**DE FR GB IT**

(56) Entgegenhaltungen:
**EP-A- 0 092 275**
**GB-A- 1 585 571**
**GB-A- 1 585 572**
**US-A- 3 678 213**
**US-A- 4 410 920**

(73) Patentinhaber: GRUNDIG E.M.V. Elektro-Mechanische Versuchsanstalt Max Grundig holländ. Stiftung & Co. KG., Kurgartenstrasse 37, D-8510 Fürth/Bay. (DE)

(72) Erfinder: Zöllner, Rainer, Birkenweg 4, D-8501 Dietenhofen (DE)

**Beschreibung**

Die Erfindung bezieht sich auf eine Vorrichtung zur Führung eines Magnetbandes über Bandführungselemente in einem Videomagnetbandgerät gemäß dem Oberbegriff des Anspruchs 1.

In modernen Videomagnetbandgeräten wird das in einer Kassette befindliche Magnetband nach Einlegen derselben in das Gerät und Betätigen einer Betriebsfunktionstaste, wie z. B. der Wiedergabetaste, aus der Kassette ausgefädelt und um die Videokopftrommel geführt. Dieses Ausfädeln – wie auch das Zurückfädeln in die Kassette – bewerkstelligt ein motorgetriebener sogenannter Transport- bzw. Fädelmechanismus, meist in Form von einem Transportring mit Fädelstiften und Rollen aufgebaut.

Es ist aus der US-A-3678213 bekannt, die Bandführungselemente für den Fädelvorgang auf zwei ringförmigen Trägern anzuordnen, die die Kopftrommel umgeben und um die Kopftrommel durch Antrieb des einen Trägers drehbar sind. Während der Drehung des einen Trägers wird dabei der zweite mechanisch mit ihm verbundene Träger durch eine Art Schleppkupplung verzögert mitgenommen. Die Schleppkupplung besteht hierbei aus einem Führungsschlitz des einen Trägers, in den ein Stift des zweiten Trägers eingreift. Nachteilig ist hierbei, daß die Schleppkupplung nicht auf eine beliebige Position bezogen steuerbar ist. Vorteilhaft ist jedoch, wenn beim Einfädelvorgang oder beim Zurückführen sich die beiden Träger an einer bedarfsweise vorgegebenen Stelle automatisch koppeln bzw. trennen und somit eine verzögerte Mitnahme beim Zurückführen der Bandführungsstifte umgekehrt zum Bandeinfädelvorgang erfolgt.

Der Erfindung liegt daher die Aufgabe zugrunde, eine Vorrichtung zur Führung eines Magnetbandes über Bandführungselemente in einem Videomagnetbandgerät zu schaffen, mit dem für zwei oder mehrere voneinander abhängige oder unabhängige Fädel- bzw. Einzugsringe eine zwangsweise Mitnahme und eine selbsttätige Freigabe der Fädelringe in unterschiedlicher Zeitfolge und an unterschiedlicher Position ermöglicht wird.

Diese Aufgabe wird erfindungsgemäß durch die im kennzeichnenden Teil des Patentanspruchs 1 angegebenen Merkmale gelöst.

Vorteilhafte Weiterbildungen der erfindungsgemäßen Vorrichtung ergeben sich aus den Unteransprüchen 2 und 3.

Ein Ausführungsbeispiel der erfindungsgemäßen Vorrichtung ist in der Zeichnung näher erläutert. Es zeigen

Fig. 1 eine perspektivische Draufsicht auf eine Vorrichtung zur Führung eines Magnetbandes in schematisierter Darstellung,

Fig. 2 eine vergrößerte Ansicht von in der Vorrichtung nach Fig. 1 verwendeten Teilen und

Fig. 3 eine vergrößerte Darstellung des in Fig. 2 verwendeten Kupplungsteils.

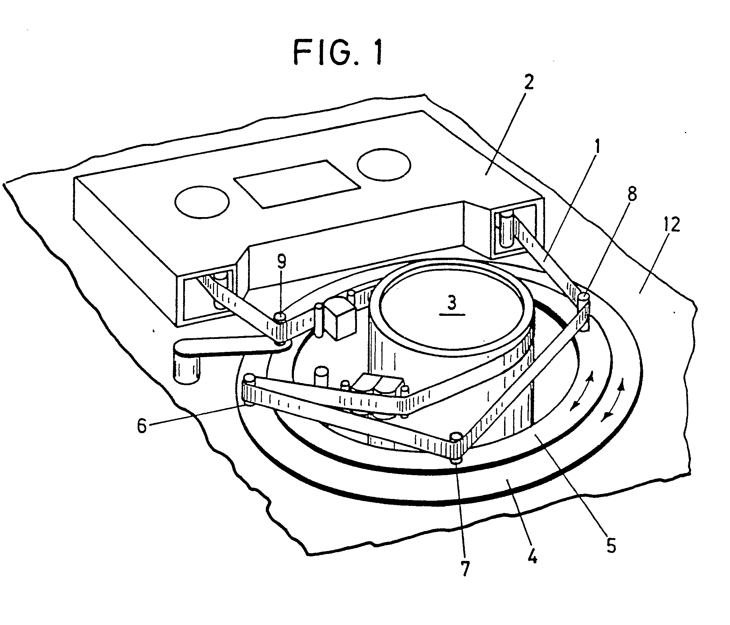

Gemäß Figur 1 ist in perspektivischer Draufsicht eine Vorrichtung zur Führung eines Magnetbandes dargestellt, bei der ein Magnetband 1 aus einer Magnetbandkassette 2 heraus durch diverse Führungsstifte 6, 7, 8, 9 von einer Seite um eine Videokopftrommel 3 teilweise geschlungen ist. Ein ringförmiger Träger 4 wird hierbei von einem Antriebsmotor angetrieben, der der Übersichtlichkeit wegen nicht dargestellt ist.

Dem in Figur 1 dargestellten Fädel-Endzustand geht voraus, daß das zunächst in der Magnetbandkassette 2 befindliche Magnetband 1 bei Aktivierung des oben genannten Antriebsmotors für den ersten ringförmigen Träger 4 im Falle der Aufnahme- oder Wiedergabefunktion des Gerätes aus der Kassette 2 mittels eines Mitnehmer- bzw. Führungsstiftes 6 ausgefädelt und bis zum Erreichen der Endstellung des Trägers 4 derart teilweise um die Videokopftrommel 3 geschlungen wird, daß eine Aufzeichnung bzw. Wiedergabe der aufzuzeichnenden bzw. aufgezeichneten Signale in Schrägspuren ermöglicht wird.

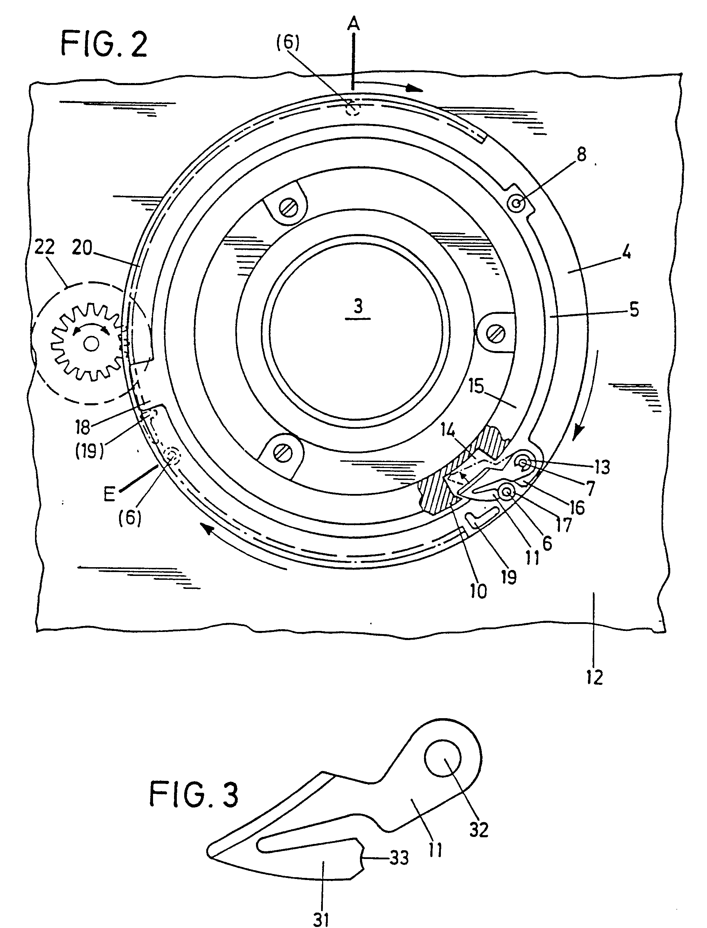

Während des Herausziehens des Magnetbandes 1 aus seiner Anfangsstellung in der Kassette 2 bis zur Endstellung (Umschlingung der Videokopftrommel und Anliegen an weiteren funktionsnotwendigen Geräteteilen, wie z. B. Tonkopf, Capstan usw.), d. h. während der Drehbewegung der beiden ausgangs zusammengekuppelten Träger 4 und 5 wird mittels einer Kupplungseinrichtung in Form einer in Figur 2 näher dargestellten Klinkenkupplung in einer vorgegebenen Winkelstellung und somit in einer bestimmten zeitlichen und örtlichen Position der zweite ringförmige Träger 5 selbsttätig und vom ersten Träger 4 abgekuppelt.

Figur 2 zeigt diese erfindungsgemäße Klinkenkupplung, aufgebaut im wesentlichen aus einer einstückigen elastischen Klinke 11, die auf den Führungsstift 7 als Drehpunkt aufgesteckt ist und mit einem Sicherungsring 13 am Führungsstift gehalten ist. In der Darstellung der Figur 2 befindet sich die Klinke 11 gerade in der Position, in der sie in eine Ausnehmung 14 eines einem Chassis 12 zugeordneten feststehenden Führungsteils 15 einschwenken kann. Die Figur 2 zeigt ferner einen angespritzten Anschlag 18 am Träger 5 und ferner einen angespritzten Winkel 19 am Zahnkranz 20, deren Funktionen im Zusammenhang mit der weiter unten näher erläuterten Wirkungsweise der erfindungsgemäßen Klinkenkupplung beschrieben wird.

Figur 3 zeigt eine vergrößerte Darstellung der in Figur 2 verwendeten Klinke 11. Die Klinke weist eine federnde Rastnase 31 auf; ferner ist eine Bohrung 32 für den Führungsstift 7 vorgesehen.

Die Funktion der erfindungsgemäßen Klinkenkupplung ist folgende: Wird der Zahnkranz 20 (Fig. 2) für den Fädelmechanismus vom vorgesehenen Antriebsmotor 22 über eine geeignete Vorrichtung (Zahnrad, Ritzel, o. ä.) aus einer Anfangsstellung (beispielsweise im Bereich der mit A gekennzeichneten Stelle) heraus angetrieben, werden beide Träger 4, 5 aufgrund ihrer in der Anfangsstellung A zwangsweise erfolgenden Kopplung bewegt, wobei gemäß dem Ausführungsbeispiel nach Figur 2 der Anschlag 18 in der Anfangsstellung der gesamten Anordnung sich ungefähr im Bereich der (fixen) Ausnehmung 14 befindet. Im Verlauf der Drehbewegung der beiden Träger 4, 5 in Pfeilrichtung sowie der mitaufgesetzten Führungsstifte 6 und 7 mit der zugehörigen Klinke 11, kommen diese an die Ausnehmung 14, wo die Klinke 11, hervorgerufen durch den Ansatz 10, zwangsläufig in die Ausnehmung 14 einschwenkt. Ebenso wird durch den hervorstehenden Ansatz 10 der zweite Träger 5 an der Mitnahme gehindert, und allein der erste Träger 4 setzt die Drehbewegung fort, nachdem die Klinke diesen freigegeben hat. Diese Drehbewegung des ersten Trägers 4 endet durch Anstoßen des Winkels 19 am Anschlag 18, der sich nach dem Einschwenken der Klinke 11 in die Ausnehmung 14 in der in Fig. 2 gezeichneten Stellung befindet und somit eine Endstellung E kennzeichnet, in der dann das Magnetband 1 in gewünschter Weise an den entsprechenden Teilen (Kopftrommel, Löschkopf, etc.) angelegt ist.

Beim Zurückfädeln des Magnetbandes 1 läuft der erste Träger 4 in umgekehrter Drehrichtung und nimmt ab dem Bereich der Ausnehmung 14 den zweiten Träger 5 mit zurück. Dies geschieht über die Mitnahme der Halterung 16 durch die Halterung 17 des Führungsstiftes 6, wobei auch die Klinke 11 ausschwenkt.

Wie die Figur 3 deutlich erkennen läßt, besitzt die Klinke 11 eine federnde Rastnase 31, deren freies Ende zum Teil eine konkav ausgebildete Kante 33 aufweist, die sich beim Zurücklaufen der Träger 4 und 5 ab der Ausnehmung 14 an den Führungsstift 6 anlegt. Sollte dies einmal nicht vollständig oder überhaupt nicht erfolgen bzw. erfolgt sein, so kuppelt die Klinke 11 spätestens beim Anschlag 18 in der Anfangsstellung A an den Führungsstift 6 an, womit die richtige Grundstellung aller Teile für einen nachfolgenden Fädelvorgang geschaffen ist.

Sind mehrere ringförmige Träger durch den ersten, getrennt angetriebenen Träger 4 mitzunehmen, so können über weitere Klinkenkupplungen verschiedene Stellungen der einzelnen Träger ermöglicht werden.

**Patentansprüche**

1. Vorrichtung zur Führung eines Magnetbandes über Bandführungselemente (6, 7, 8, 9) in einem Videomagnetbandgerät, das eine drehbare Kopftrommel (3) mit zugeordneten Magnetköpfen aufweist, wobei das Magnetband (1) aus einer Bandkassette (2) herausgezogen in Schrägspurführung die Kopftrommel teilweise umschlingt, und die Bandführungselemente auf mindestens zwei die Kopftrommel umgebenden, mechanisch miteinander gekoppelten, ringförmigen Trägern (4, 5) angeordnet und um die Kopftrommel drehbar sind, dadurch gekennzeichnet, daß die Kopplung der Träger (4, 5) mittels einer Klinkenkupplung (6, 7, 11, 14, 16) erfolgt, und daß die Klinkenkupplung (6, 7, 11, 14, 16) die Träger (4, 5) in einer vorgegebenen Drehwinkelstellung zueinander und zu einem stationären Führungsteil (15) selbständig ein- und auskuppelt.

2. Vorrichtung nach Anspruch 1, dadurch gekennzeichnet, daß die Klinkenkupplung (6, 7, 11, 14, 16) im wesentlichen aus einer einstückigen aus elastischem Kunststoff gefertigten Klinke (1) besteht.

3. Vorrichtung nach Anspruch 1 oder 2, dadurch gekennzeichnet, daß die Klinke (11) der Klinkenkupplung eine federnde Rastnase (31) aufweist.

**Claims**

1. Device for the guidance of a magnetic tape via tape guide elements (6, 7, 8, 9) in a video tape recorder which has a rotatable head drum (3) with assigned magnetic heads, the magnetic tape (1), drawn out from a tape cartridge (2), partially wrapping around the head drum in helical guidance, and the tape guide elements being arranged on at least two annular carriers (4, 5) surrounding the head drum and mechanically intercoupled, and being rotatable about the head drum, characterized in that the coupling of the carriers (4, 5) takes place by means of a catch coupling (6, 7, 11, 14, 16), and in that the catch coupling (6, 7, 11, 14, 16) automatically couples and uncouples the carriers (4, 5) in a predetermined rotational angular position with respect to each other and with respect to a stationary guide part (15).

2. Device according to claim 1, characterized in that the catch coupling (6, 7, 11, 14, 16) consists essentially of a catch (11) made integrally from flexible plastic.

3. Device according to claim 1 or 2, characterized in that the catch (11) of the catch coupling has a resilient detent (31).

**Revendications**

1. Dispositif de guidage d'une bande magnétique, sur des éléments de guidage de bande (6, 7, 8, 9) pour un appareil vidéo à bande magnétique, qui comporte un tambour à têtes (3) rotatif avec têtes magnétiques associées où la bande magnétique (1), extraite d'une cassette de bande (2), enveloppe partiellement hélicoïdalement le tambour à têtes, et où les éléments du guidage de la bande sont disposés sur au moins deux supports (4, 5) annulaires, entourant le tambour à têtes et, accouplés mécaniquement entre eux de manière à pouvoir tourner autour du tambour à têtes, caractérisé en ce que l'accouplement des supports (4, 5) s'effectue à l'aide d'un accouplement à cliquet (6, 7, 11, 14, 16), et en ce que cet accouplement à cliquet (6, 7, 11, 14, 16) accouple et désaccouple automatiquement, les supports (4, 5) dans une position angulaire donnée l'un par rapport à l'autre et par rapport à un élément de guidage (15) fixe.

2. Dispositif selon la revendication 1, caractérisé en ce que l'accouplement à cliquet (6, 7, 11, 14, 16) est constitué pour l'essentiel d'un cliquet (11) en matière synthétique élastique d'une seule pièce.

3. Dispositif selon la revendication 1 ou 2, caractérisé en ce que le cliquet (11) de l'accouplement à cliquet comporte un nez d'arrêt (31) formant ressort.

# FIG. 1

FIG. 2

FIG. 3